# EUROPÄISCHE PATENTSCHRIFT

(11) **EP 1 748 026 B1**
(45) Veröffentlichungstag und Bekanntmachung des Hinweises auf die Patenterteilung: **27.02.2008**
(21) Anmeldenummer: 06013860.9
(22) Anmeldetag: 04.07.2006
(51) Int. Cl.: B66F 9/20, G05G 1/26, B60N 2/46, G05G 5/00

(54) **Bedienanordnung für ein Flurförderzeug**
Operating arrangement for an industrial truck
Dispositif de commande pour chariot de manutention

(30) Priorität: 28.07.2005 DE 102005035382
(43) Veröffentlichungstag der Anmeldung: 31.01.2007
(73) Patentinhaber: STILL GMBH, 22113 Hamburg (DE)
(72) Erfinder: Knipfelberg, Karl, 38173 Sickte (DE); Petri, Viktor, 21035 Hamburg (DE); Szymanski, Marek, 21465 Wentorf (DE); Tödter, Joachim, Dr., 22391 Hamburg (DE)
(74) Vertreter: Geirhos, Johann

(56) Entgegenhaltungen:
- EP-A- 1 350 669
- DE-A1-7102004 052 75
- DE-U1-5202006 004 96
- GB-A- 1 210 896

## Beschreibung

Die Erfindung betrifft eine Bedienanordnung für ein Flurförderzeug, insbesondere für einen Gegengewichtsgabelstapler, mit einer Armlehne und mehreren im Bereich der Armlehne angeordneten Minihebeln, die von einer Bedienperson mit den Fingerspitzen betätigbar sind. Eine solche Bedienanordnung wird in der EP-A-1 350 669 offenbart.

Bedienanordnungen der genannten Art sind für verschiedene Typen von Flurförderzeugen mit Fahrersitz, wie beispielsweise Gegengewichtsgabelstaplem oder Schubmast- oder Schubgabelstaplern bekannt. Bei Gegengewichtsgabelstaplem ist der Fahrersitz und damit die Armlehne in Längsrichtung des Flurförderzeugs ausgerichtet; bei Schubmast- oder Schubgabelstaplern sind Fahrersitz und Armlehne in der Regel in Fahrzeugquerrichtung angeordnet. Alle Richtungs- und Positionsangaben beziehen sich im Folgenden auf die Orientierung einer auf dem Fahrersitz sitzenden Bedienperson, wobei von einer Blickrichtung der Bedienperson parallel zur Armlehne ausgegangen wird. Die Begriffe "vorne" und "hinten" werden derart verwendet, dass sich "vorne" auf der Armlehne die Hand der Bedienperson befindet und "hinten" auf der Armlehne der Ellenbogen.

Die Minihebel befinden sich in einem vorderen Abschnitt der Armlehne, derart, dass sich die Finger eines auf der Armlehne abgestützten Unterarms der Bedienperson im Bereich der Minihebel befinden. Die Minihebel dienen in einem Flurförderzeug in der Regel zur Bedienung der Lasthandhabungsfunktionen, wie Anheben und Absenken eine Lastaufnahmemittels, Neigen eines Hubgerüsts, seitliches Verschieben eines Lastaufnahmemittels und gegebenenfalls einer hydraulischen Zusatzfunktion. Ein weiterer Minihebel kann als Fahrtrichtungsschalter des Flurförderzeugs vorgesehen sein. Die Anordnung der Minihebel relativ zueinander kann beispielsweise entlang einer Reihe erfolgen. Bekannt ist es ebenfalls, die Minihebel auf einem Kreisbogen anzuordnen, sodass jeder Minihebel durch Drehen der Hand um das Handgelenk mit Zeigefinger und Daumen erreichbar ist, ohne den Unterarm zu bewegen. In der zeitgleich mit der vorliegenden Patentanmeldung eingereichten Anmeldung der Anmelderin ist beschrieben, jedem Finger der rechten Hand der Bedienperson einen Minihebel zuzuordnen und die Minihebel dabei so zu positionieren, dass sich alle Fingerspitzen gleichzeitig auf dem jeweils zugeordneten Minihebel befinden.

Bei bekannten Anordnungen sind die Minihebel häufig nur mit einer ergonomisch ungünstigen Handhaltung der Bedienperson erreichbar. Darüber hinaus besteht die Gefahr einer ungewollten Betätigung der in der Regel sehr leichtgängigen Minihebel, beispielsweise durch versehentliches Anstoßen an einen Minihebel während des Auf- oder Absteigens.

Der Erfindung liegt daher die Aufgabe zugrunde, eine Bedienanordnung der eingangs genannten Art zur Verfügung zu stellen, bei der die Minihebel ergonomisch optimal angeordnet sind und bei der die Gefahr eines unabsichtlichen Betätigens eines Minihebels vermindert ist.

Diese Aufgabe wird erfindungsgemäß dadurch gelöst, dass die Minihebel in einer Vertiefung der Armlehne angeordnet sind, derart, dass die Armlehne - von der Bedienperson aus betrachtet - vor und hinter den Minihebeln jeweils einen Abschnitt aufweist, dessen Oberseite höher ist als die Oberseite der Minihebel. Die Minihebel sind damit vollständig in der Armlehne versenkt. Für die Ergonomie der Bedienung bedeutet dies, dass die Bedienperson die Hand nicht anheben muss, um zu den Minihebeln zu gelangen. Die Bedienperson kann den Handballen auf die Armlehne auflegen und gleichzeitig die Fingern an den unterhalb der Oberfläche der Armlehne angeordneten Minihebeln abstützen. Der vor der Vertiefung für die Minihebel befindliche Abschnitt der Armlehne, dessen Oberfläche ebenfalls höher ist als die Minihebel, ist durch waagrechtes Ausstrecken der Finger erreichbar und kann als Ablagefläche für die Finger dienen, wenn eine Betätigung der Minihebel nicht erforderlich ist. Dadurch, dass die Armlehne sowohl vor, als auch hinter den Minihebeln einen erhöhten Abschnitt aufweist, ist die Gefahr eines unbeabsichtigten Betätigens der Minihebel verringert. Auch dann, wenn die Bedienperson auf die Armlehne stürzt, wird sich der Körper die Bedienperson mit großer Wahrscheinlichkeit ausschließlich auf den höhern Abschnitten der Armlehne abstützen, ohne mit den Minihebeln in Kontakt zu treten. Gleiches gilt analog, wenn ein größerer Gegenstand auf die Armlehne fällt.

Diese Vorteile sind noch stärker ausgeprägt, wenn die Armlehne auf mindestens einer Seite, vorzugsweise auf beiden Seiten der Minihebel einen Abschnitt aufweist, dessen Oberseite höher ist als die Oberseite der Minihebel. Darüber hinaus dienen die seitlichen, gegenüber den Minihebeln erhöhten Abschnitte zur Versteifung der Armlehne.

Gemäß einer zweckmäßigen Weiterbildung der Erfindung ist im Bereich der Oberseite des vor den Minihebeln angeordnet Abschnitts der Armlehne, dessen Oberseite höher ist als die Oberseite der Minihebel, mindestens ein Bedienelement angeordnet. Diese Bedienelemente können beispielsweise als Taster, Schalter, Schieber oder Drehknopf ausgebildet sein und dienen beispielsweise zur Betätigung der Hupe, zum Ein- und Ausschalten einer Fahrzeugbeleuchtung oder zur Wahl eines Fahrprogramms einer Fahrantriebssteuerung. Die Bedienelemente werden mit derselben Hand betätigt wie die Minihebel und sind durch Ausstrecken der Finger und gegebenenfalls geringfügiges Bewegen des Unterarms erreichbar. Eine erhöhte Anordnung der Bedienelemente ist deshalb möglich, weil eine ungewollte Betätigung der erhöht angeordneten Bedienelemente für die genannten Nebenfunktionen des Flurförderzeugs keine gefährlichen Zustände des Flurförderzeugs bewirken kann - im Gegensatz zur einer ungewollten Betätigung der Minihebel, mit denen die Funktionen zur Lasthandhabung gesteuert werden.

Im Bereich der Oberseite des hinter den Minihebeln angeordneten Abschnitts der Armlehne, dessen Oberseite höher ist als die Oberseite der Minihebel, ist eine Armauflage angeordnet. Die Armauflage kann beispielsweise von einem Polster gebildet sein und dient als definierte Auflagefläche für den Unterarm der Bedienperson. Erfindungsgemäß ist zumindest ein Teil der Armauflage höher angeordnet als die Minihebel.

Mit besonderem Vorteil ist die Oberseite der gesamten Armauflage höher als die Oberseite der Minihebel. Der auf die Armauflage aufgelegte Unterarm der Bedienperson befindet sich damit insgesamt, vom Ellenbogen bis zum Handgelenk, oberhalb des Nieveaus der der Minihebel.

Gemäß einer zweckmäßigen Weiterbildung der Erfindung ist auf mindestens einer Seite der Minihebel ein Ablagefach angeordnet. Das Ablagefach ist besonders leicht erreichbar, da es sich direkt neben den Minihebeln befindet und die Bedienperson ihren Unterarm nur geringfügig bewegen muss, um mit der Hand zum Ablagefach zu gelangen.

Weiter ist es zweckmäßig, wenn die Armlehne im Bereich der Vertiefung, in der die Minihebel angeordnet sind, eine Entwässerungsöffnung aufweist. Durch die Entwässerungsöffnung kann beispielsweise Regenwasser abfließen, das sich sonst in der Vertiefung für die Minihebel ansammeln würde.

Weitere Vorteile und Einzelheiten der Erfindung werden anhand des in den schematischen Figuren dargestellten Ausführungsbeispiels näher erläutert. Dabei zeigt
- Figur 1: die Armlehne einer erfindungsgemäßen Bedienanordnung in Draufsicht
- Figur 2: die Armlehne in Seitenansicht,
- Figur 3: die Armlehne in perspektivischer Ansicht.

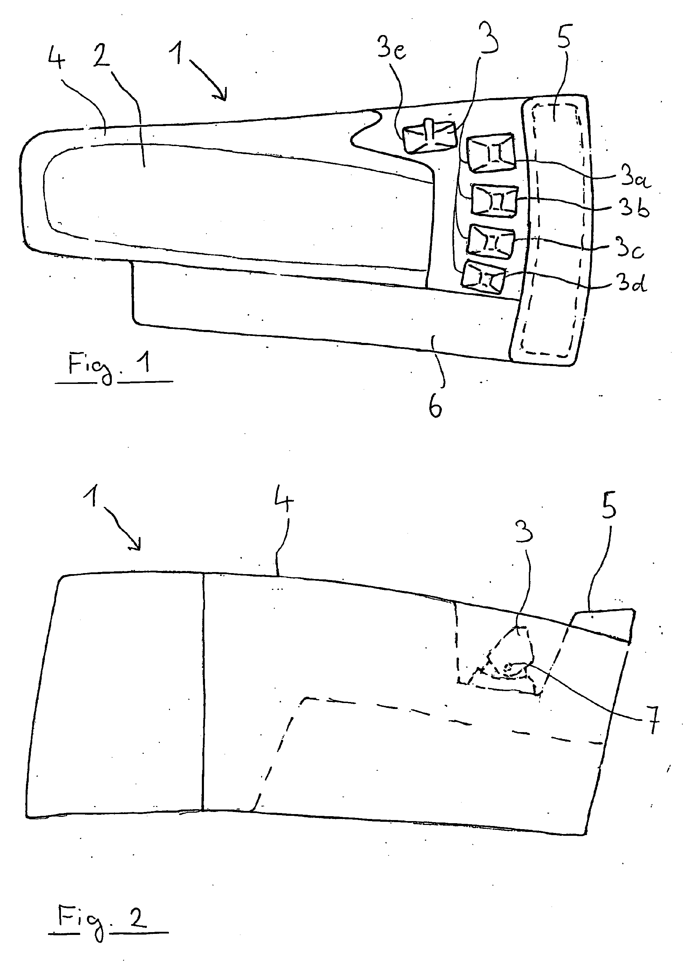

Figur 1 zeigt die Armlehne 1 der erfindungsgemäßen Bedienanordnung eines Gegengewichtsgabelstaplers in Draufsicht. Die Armlehne 1 weist in einem hinteren Abschnitt 4 eine Armauflage 2 für den Unterarm einer Bedienperson auf. Vor der Armauflage 2 sind fünf Minihebel 3 angeordnet, die mit den Fingern des auf der Armauflage 2 liegenden Arms der Bedienperson betätigbar sind. Die Minihebel 3 sind dabei derart angeordnet, dass jeder der fünf Minihebel 3 genau einem der Finger der Hand der Bedienperson zugeordnet ist und alle Minihebel 3 gleichzeitig erreichbar und betätigbar sind. Ein vor den Minihebeln 3 angeordneter Abschnitt 5 der Armlehne 1 kann als Fingerauflage dienen, wenn gerade keiner der Minihebel 3 betätigt wird. Ebenso ist es möglich, im Bereich des Abschnitts 5 Bedienelemente für verschiedene Nebenfunktionen des Gegengewichtsgabelstaplers anzuordnen.

Die vier vorderen Minihebel 3, die mit dem Zeigefinger, dem Mittelfinger, dem Ringfinger und dem kleinen Finger betätigt werden, dienen zur Steuerung der Funktionen einer Lastaufnahmevorrichtung des Gegengewichtsgabelstaplers. Dem Minihebel 3a für den Zeigefinger sind die Funktion "Heben und Senken eines Lastaufnahmemittels" zugeordnet, dem Minihebel 3b für den Mittelfinger die Funktion "Vor- und Zurückneigen eines Hubgerüsts", dem Minihebel 3c für den Ringfinger die Funktion "seitliches Verschiebens eines Lastaufnahmemittels" und dem Minihebel 3d für den kleinen Finger eine gegebenenfalls vorhandene Zusatzfunktion, beispielsweise eine am Lastaufnahmemittel angeordnete Ballenklammer. Der dem Daumen zugeordnete Minihebel 3e dient zur Auswahl der Fahrtrichtung des Gegengewichtsgabelstaplers, also der Vorwärts- oder Rückwärtsfahrt.

Seitlich neben den Minihebeln weist die Armlehne 1 ein Ablagefach 6 auf, das mit der auf der Armlehne 1 befindlichen Hand ebenfalls leicht erreichbar ist. Das Ablagefach kann beispielsweise zur Aufbewahrung von Papieren, eines tragbaren Rechners oder eines Handscanners dienen.

Die erfindungsgemäße Anordnung der Minihebel 3 in Bezug auf den vorderen Abschnitt 5 und den hinteren Abschnitt 4 der Armlehne 1 wird aus Figur 2 deutlich, welche die Armlehne 1 in Seitenansicht zeigt. Hieraus wird deutlich, dass die Minihebel derart tief angeordnet sind, dass sich deren Oberseite unterhalb der Oberseiten des hinteren Abschnitts 4 und des vorderen Abschnitts 5 der Armlehne 1 befinden. Ein unabsichtliches Betätigen eines der Minihebel 3 kann hierdurch praktisch ausgeschlossen werden, da die Minihebel 3 geschützt in einer Vertiefung der Armlehne 1 angeordnet sind.

Die Art der Betätigung der Minihebel 3 wird ebenfalls aus Figur 2 deutlich. Jeder der Minihebel 3 weist im unteren Bereich eine Schwenkachse 7 auf, um die der Minihebel 3 nach vorne und hinten geschwenkt werden kann. Die Schwenkachsen 7 sind dabei senkrecht zur typischen Ausrichtung des jeweiligen Fingers der Bedienperson ausgerichtet, sodass sich hinsichtlich der Betätigungsrichtung der Minihebel eine geringfügige Abweichung von der Längsrichtung der Armlehne 1 ergeben kann. Die Betätigung der Minihebel 3 erfolgt jeweils durch einen auf die Oberseite des Minihebels 3 aufgelegten Finger der Bedienperson, indem der Minihebel 3 mit dem Finger nach vorne oder nach hinten gedrückt wird. Alternativ ist es ebenfalls möglich, einen Minihebel mit Daumen und Zeigefinger zu greifen und ihn so zu bewegen.

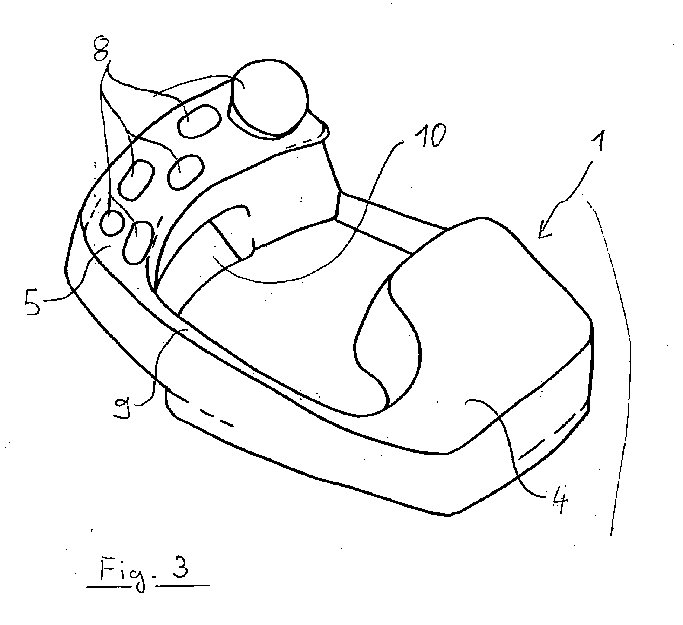

In Figur 3 ist der vordere Teil eines Grundkörpers der Armlehne 1 in perspektivischer Ansicht dargestellt, wobei hier die Minihebel 3 nicht dargestellt sind. Die Minihebel 3 können in diesen Grundkörper als Baueinheit eingesetzt werden. Eingezeichnet sind in dieser Darstellung die auf dem vorderen Abschnitt 5 der Armlehne 1 angeordneten Bedienelemente 8, die von Tastern, Wippschaltem und einem Drehknopf gebildet sind. Die Bedienelemente 8 dienen insbesondere zur Steuerung von Nebenfunktionen des Gegengewichtsgabelstaplers, beispielsweise der Beleuchtung, der Hupe oder der Auswahl von Fahrprogrammen. Weiter ist es möglich, an dem vorderen Abschnitt Anzeigeelemente, beispielsweise in Form von Signallämpchen anzuordnen.

Neben dem vorderen Abschnitt 5 und dem hinteren Abschnitt 4 weist die Armlehne 1 auch einen seitlichen Abschnitt 9 auf, dessen Oberseite höher ist als die Oberseite der Minihebel (Pos. 3, Fig. 1 und 2). Dieser seitliche Abschnitt 9 verhindert ein unbeabsichtigtes Betätigen der Minihebel auch von der Seite her und dient darüber hinaus zur Versteifung der Armlehne 1. Im unteren Bereich weist die Vertiefung, in der die Minihebel angeordnet werden, eine Entwässerungsöffnung 10 auf. Diese Entwässerungsöffnung verhindert, dass sich Flüssigkeit, wie beispielsweise Regenwasser, in der Vertiefung ansammelt und erleichtert damit auch ein Reinigen der Armlehne.

## Patentansprüche

1. Bedienanordnung für ein Flurförderzeug, insbesondere für einen Gegengewichtsgabelstapler, mit einer Armlehne (1) und mehreren im Bereich der Armlehne (1) angeordneten Minihebeln (3), die von einer Bedienperson mit den Fingerspitzen betätigbar sind, **dadurch gekennzeichnet, dass** die Minihebel (3) in einer Vertiefung der Armlehne (1) angeordnet sind, derart, dass die Armlehne (1) - von der Bedienperson aus betrachtet - vor und hinter den Minihebeln (3) jeweils einen Abschnitt (4, 5) aufweist, dessen Oberseite höher ist als die Oberseite der Minihebel (3).

2. Bedienanordnung nach Anspruch 1, **dadurch gekennzeichnet, dass** die Armlehne (1) auf mindestens einer Seite, vorzugsweise auf beiden Seiten der Minihebel (3) einen Abschnitt (9) aufweist, dessen Oberseite höher ist als die Oberseite der Minihebel (3).

3. Bedienanordnung nach Anspruch 1 oder 2, **dadurch gekennzeichnet, dass** im Bereich der Oberseite des vor den Minihebeln (3) angeordnet Abschnitts (5) der Armlehne (1), dessen Oberseite höher ist als die Oberseite der Minihebel (3), mindestens ein Bedienelement (8) angeordnet ist.

4. Bedienanordnung nach einem der Ansprüche 1 bis 3, **dadurch gekennzeichnet, dass** im Bereich der Oberseite des hinter den Minihebeln (3) angeordneten Abschnitts (4) der Armlehne (1), dessen Oberseite höher ist als die Oberseite der Minihebel (3), ein Armauflage (2) angeordnet ist.

5. Bedienanordnung nach einem der Ansprüche 1 bis 4, **dadurch gekennzeichnet, dass** die Oberseite der gesamten Armauflage (2) höher ist als die Oberseite der Minihebel (3).

6. Bedienanordnung nach einem der Ansprüche 1 bis 5, **dadurch gekennzeichnet, dass** auf mindestens einer Seite der Minihebel (3) ein Ablagefach (6) angeordnet ist.

7. Bedienanordnung nach einem der Ansprüche 1 bis 7, **dadurch gekennzeichnet, dass** die Armlehne (1) im Bereich der Vertiefung, in der die Minihebel (3) angeordnet sind, eine Entwässerungsöffnung (10) aufweist.

## Claims

1. Operating arrangement for an industrial truck, in particular for a counterbalance fork-lift truck, comprising an arm rest (1) and a plurality of mini levers (3) which are arranged in the region of the arm rest (1) and can be operated by an operator with the fingertips, **characterised in that** the mini levers (3) are arranged in a recess of the arm rest (1) in such a way that the arm rest (1) - viewed from the operator - has a section (4, 5) in front of and behind the mini levers (3) in each case, the upper side of which is higher than the upper side of the mini levers (3).

2. Operating arrangement according to claim 1, **characterised in that** the arm rest (1), on at least one side, preferably on either side of the mini levers (3), has a section (9), the upper side of which is higher than the upper side of the mini levers (3).

3. Operating arrangement according to claim 1 or 2, **characterised in that** at least one operating element (8) is arranged in the region of the upper side of the section (5) of the arm rest (1) which is arranged in front of the mini levers (3), the upper side of said section being higher than the upper side of the mini levers (3).

4. Operating arrangement according to any one of claims 1 to 3, **characterised in that** an arm support (2) is arranged in the region of the upper side of the section (4) of the arm rest (1) which is arranged behind the mini levers (3), the upper side of said section being higher than the upper side of the mini levers (3).

5. Operating arrangement according to any one of claims 1 to 4, **characterised in that** the upper side of the entire arm support (2) is higher than the upper side of the mini levers (3).

6. Operating arrangement according to any one of claims 1 to 5, **characterised in that** a storage compartment (6) is arranged on at least one side of the mini levers (3).

7. Operating arrangement according to any one of claims 1 to 7, **characterised in that** the arm rest (1) has a drainage opening (10) in the region of the recess, in which the mini levers (3) are arranged.

## Revendications

1. Dispositif de commande d'un chariot de manutention, notamment d'un chariot élévateur à contrepoids comportant un accoudoir (1) et plusieurs mini-manettes (3) installées dans la région de l'accoudoir (1), ces mini-manettes étant commandées par l'opérateur avec la pointe de ses doigts,
**caractérisé en ce que**
les mini-manettes (3) sont placées dans une cavité de l'accoudoir (1) de façon que l'accoudoir (1) vu par l'opérateur, comporte un segment (4, 5) respectivement devant et derrière les mini-manettes (3) dont le côté supérieur est plus haut que le côté supérieur des mini-manettes (3).

2. Dispositif de commande selon la revendication 1,
**caractérisé en ce que**
l'accoudoir (1) comporte au moins d'un côté, et de préférence des deux côtés des mini-manettes (3), un segment (9) dont le côté supérieur est plus haut que le côté supérieur des mini-manettes (3).

3. Dispositif de commande selon la revendication 1 ou 2,
**caractérisé en ce que**
dans la région du côté supérieur du segment (5) de l'accoudoir (1), située devant les mini-manettes (3), et dont le côté supérieur est plus haut que le côté supérieur des mini-manettes (3), il y a au moins un élément de commande (8).

4. Dispositif de commande selon l'une des revendications 1 à 3,
**caractérisé par**
un appui (2) pour le bras, dans la région du côté supérieur du segment (4) derrière les mini-manettes (3) sur l'accoudoir (1), segment (4) dont le côté supérieur est plus haut que le côté supérieur des mini-manettes (3)

5. Dispositif de commande selon l'une des revendications 1 à 4,
**caractérisé en ce que**
le côté supérieur de l'ensemble de l'appui (2) pour le bras est plus haut que le côté supérieur des mini-manettes (3).

6. Dispositif de commande selon l'une des revendications 1 à 5,
**caractérisé en ce qu'**
au moins un côté des mini-manettes (3) comporte un logement de rangement (6).

7. Dispositif de commande selon l'une des revendications 1 à 6,
**caractérisé en ce que**
l'accoudoir (1) comporte un orifice d'évacuation d'eau (10) dans la région de la cavité dans laquelle se trouvent les mini-manettes (3).
